# EUROPÄISCHE PATENTSCHRIFT

(11) **EP 1 152 155 B1**
(45) Veröffentlichungstag und Bekanntmachung des Hinweises auf die Patenterteilung: **01.06.2005**
(21) Anmeldenummer: 01108670.9
(22) Anmeldetag: 06.04.2001
(51) Int. Cl.: F15B 9/09, E02F 9/22

(54) **Vorrichtung zur Einstellung des Differenzdruckes in einem Fluidzylinder**
Device for setting the differential pressure in a fluid cylinder
Dispositif pour ajuster la pression différentielle dans un vérin

(30) Priorität: 04.05.2000 DE 10021744
(43) Veröffentlichungstag der Anmeldung: 07.11.2001
(73) Patentinhaber: Festo AG & Co, 73734 Esslingen (DE)
(72) Erfinder: Arbter, Jürgen, 71334 Waiblingen (DE); Hägele, Hans-Peter, 73770 Denkendorf (DE)
(74) Vertreter: Vetter, Hans, Dipl.-Phys. Dr.

(56) Entgegenhaltungen:
- DE-C- 19 801 338
- US-A- 3 864 913
- US-A- 5 424 941
- US-A- 5 457 959

## Beschreibung

Die Erfindung betrifft eine Vorrichtung zur Einstellung des Differenzdrucks in den Kammern eines Fluidzylinders mittels einer Proportionalventilanordnung, gemäß dem Oberbegriff des Anspruchs 1.

Bei einer aus der US-A-5,424,941 bekannten Regelanordnung werden gewünschte Werte von Position, Geschwindigkeit und Beschleunigung berechnet. Es wird also ein bestimmter berechneter Bewegungsablauf vorgegeben, der mit Hilfe des Differenzdrucks einer Stellgröße geregelt wird. Dabei kommt es lediglich auf den Bewegungsablauf an, während die Ausübung einer Kraft durch die Kolbenstange, insbesondere in deren Endposition keine Rolle spielt.

Bei bestimmten Anwendungen muss jedoch durch einen Fluidzylinder eine definierte Kraft aufgebracht werden, beispielsweise beim Ultraschallschweißen, Punktschweißen, Pressen, Fügen od. dgl. Diese Kraft kann über den Differenzdruck in den beiden Zylinderkammern vorgegeben werden. Würde man den für die definierte Kraft in der Endlage erforderlichen Differenzdruck sofort vorgeben, so würde der Kolben bei hoher Kraft mit viel zu hoher Geschwindigkeit bewegt werden und würde mit zu hoher Geschwindigkeit auf diejenige Stelle aufprallen, an der der Druck ausgeübt werden soll.

Um einen solchen Aufprall zu vermeiden, ist es bereits aus der DE 37 08 989 C2 oder der US-A-5,457,959 bekannt, den Kolben bei Erreichen einer bestimmten Position vor der Endlage durch Umschalten auf einen geringeren Differenzdruck abzubremsen. Es handelt sich also wiederum um eine Positionsregelung. Das Erreichen der Endlage wird durch einen Differenzdrucksensor erkannt, und dieser leitet dann einen erneuten Druckaufbau ein, um die erforderliche Kraft an der zu bearbeitenden Stelle aufzubringen. Diese bekannte Anordnung ist relativ aufwendig und benötigt in der Praxis eine Vielzahl von Ventilen und Drosseln sowie eine entsprechend aufwendige Steuerung bzw. Regelung.

Eine Aufgabe der vorliegenden Erfindung besteht darin, mit einer einfacheren Regelung und einer einfacheren und kostengünstigeren Ventilanordnung eine bestimmte Kraftausübung durch den Kolben in der Endposition vorzugeben und dabei die Kolbengeschwindigkeit so zu verringern, dass ein zu heftiger Aufprall in der Endposition vermieden wird.

Diese Aufgabe wird erfindungsgemäß durch die Merkmale des Anspruchs 1 gelöst.

In vorteilhafter Weise kann dem Regler direkt ein Differenzdruck als Sollwert vorgegeben werden, durch den die gewünschte Kraftausübung in der Endposition erreicht wird. Durch Überlagerung der Regelung mittels eines geschwindigkeitsabhängigen Werts verringert dieser während der Bewegung automatisch den Differenzdruck und beendet seine Wirkung in der Endposition, da dort die Kolbengeschwindigkeit zu Null wird. Dabei kann durch den Einfluss des Geschwindigkeits-Istwerts, also quasi durch einen überlagerten Regelkreis, eine beliebig einstellbare Geschwindigkeitskontrolle bzw. Geschwindigkeit erreicht werden, indem während der Bewegung automatisch ein um einen geschwindigkeitsabhängigen Anteil reduzierter Drucksollwert vorgegeben wird. Dieser bewirkt, dass der Antrieb langsamer mit konstanter Geschwindigkeit ausfährt , wobei erst bei Erreichen der Endlage der gewünschte Differenzdruck in Abhängigkeit des Differenzdruck-Sollwerts vorgegeben wird.

. Zur Verringerung des Differenzdrucks während der Bewegung dient zweckmäßigerweise eine Subtrahieranordnung, durch die der Differenz-Sollwert oder die Regelabweichung um den Geschwindigkeits-Istwert oder um einen von diesem abhängigen Wert verringert wird.

Durch die in den Unteransprüchen aufgeführten Maßnahmen sind vorteilhafte Weiterbildungen und Verbesserungen der im Anspruch 1 angegebenen Vorrichtung möglich.

Zur Bildung des Geschwindigkeits-Istwerts wird vorzugsweise eine einfache Positionsmessvorrichtung für den Kolben herangezogen, dessen Positions-Istwert durch eine Differenzierstufe in einen Geschwindigkeits-Istwert umgesetzt wird.

Der Differenzdruck-Istwert kann in einfacher Weise ebenfalls mittels einer Subtrahieranordnung aus den Messgrößen zweier Drucksensoren zur Erfassung des Drucks in den Kammern des Fluidzylinders gebildet werden, wobei alternativ hierzu auch ein einziger Differenzdrucksensor verwendet werden kann.

Die Proportionalventilanordnung kann im einfachsten Falle durch ein einziges Proportionalventil realisiert werden, das beispielsweise als 5/3-Wegeventil ausgebildet ist. Alternativ hierzu können prinzipiell auch zwei 3/3-Wegeventile verwendet werden.

In einer alternativen Ausgestaltung kann als Proportionalventilanordnung auch ein mit der einen Zylinderkammer verbundenes 3/3-Proportional-Wegeventil und ein mit der anderen Zylinderkammer verbundenes 3/2-Schaltventil vorgesehen sein. Bei dieser Ausgestaltung ist der Referenzdruck immer der Umgebungsdruck oder der Druck einer Druckquelle, die am Schaltventil anliegen, so dass ein einziger Drucksensor oder Druck-Spannungs-Wandler ausreichend ist, um indirekt den Differenzdruck zu erfassen.

Zwei Ausführungsbeispiele der Erfindung sind in der Zeichnung dargestellt und in der nachfolgenden Beschreibung näher erläutert. Es zeigen:
- Fig. 1: ein Blockschaltbild des ersten Ausführungsbeispiels mit einem 5/3-Proportional-Wegeventil und
- Fig. 2: ein Teilblockschaltbild des zweiten Ausführungsbeispiels mit einem 3/3-Proportional-Wegeventil und einem 3/2-Schaltventil.

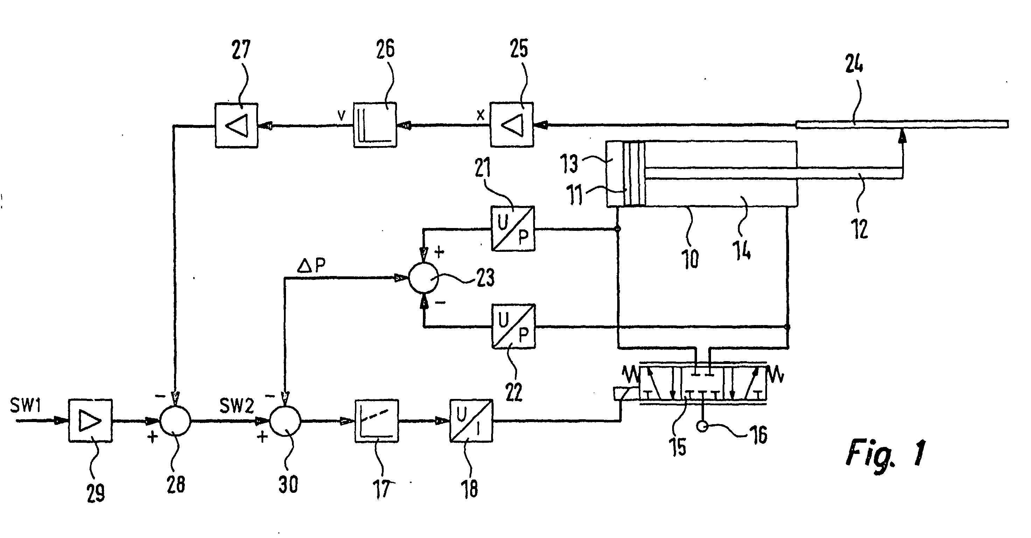

In Figur 1 ist schematisch ein Fluidzylinder 10, beispielsweise ein Pneumatik- oder Hydraulikzylinder, mit einem Kolben 11 und einer Kolbenstange 12 dargestellt. Der Fluidzylinder 10 dient beispielsweise als Stellglied zur Ausübung einer vorgebbaren Kraft mittels der Kolbenstange 12, wie dies insbesondere beim Ultraschallschweißen, Punktschweißen, Pressen, Fügen od.dgl. benötigt wird.

Die beiden Zylinderkammern 13, 14 können je nach Bewegungsrichtung des Kolbens 11 mittels eines als Proportionalventil ausgebildeten 5/3-Wegeventils 15 mit einer Druckquelle 16 verbunden werden. Durch entsprechende Einstellung des 5/3-Wegeventils 15 kann ein gewünschter Differenzdruck in den Zylinderkammern 13, 14 vorgegeben werden.

Alternativ zu einem 5/3-Wegeventil können auch andere Proportionalventilanordnungen eingesetzt werden, beispielsweise zwei 3/3-Wegeventile.

Zur Einstellung des Differenzdrucks bzw. Ansteuerung des 5/3-Wegeventils 15 dient ein Regelkreis. Einem Druckregler 17 dieses Regelkreises wird als Differenzdruck-Istwert ÄP die Differenz zwischen den Druckwerten in den beiden Zylinderkammern 13, 14 und als Differenzdruck-Sollwert SW1 der in der End- bzw. Anlageposition der Kolbenstange gewünschte Differenzdruckwert zugeführt. Der Druckregler 17 regelt über einen Spannung-Strom-Wandler 18 das 5/3-Wegeventil 15.

Zur Erfassung der Druckwerte in den beiden Zylinderkammern 13, 14 dienen Druck-Spannungs-Wandler 21, 22, die im Ausführungsbeispiel an die Zuleitungen zu den beiden Zylinderkammern 13, 14 angeschlossen sind, die jedoch auch direkt an diesen Zylinderkammern angeordnet sein können und beispielsweise als Drucksensoren ausgebildet sind. Die Ausgangssignale dieser Druck-Spannungs-Wandler 21, 22 werden in einer Subtrahierstufe 23 zur Bildung des Differenz-Sollwerts ÄP verknüpft. Alternativ hierzu kann auch ein Differenzdrucksensor bzw. ein Differenzdruck-Spannungs-Wandler eingesetzt werden, so dass die Substrahierstufe 23 entfallen kann.

Dem Fluidzylinder 10 ist eine Positionsmessvorrichtung 24 zur Erfassung der Kolbenposition bzw. Kolbenstangenposition zugeordnet. Das in einer Verstärkerstufe 25 verstärkte Positionssignal x wird in einer Differenzierstufe 26 zur Bildung des Geschwindigkeits-Istwerts v des Kolbens bzw. der Kolbenstange differenziert und anschließend in einer weiteren Verstärkerstufe 27 verstärkt. Die Verstärkerstufen 25, 27 können alternativ oder zusätzlich auch als Signalaufbereitungsstufen ausgebildet sein, in denen auch vom Positionswert oder Geschwindigkeitswert gemäß vorgegebenen Funktionen abhängige Werte gebildet werden können.

Der am Ausgang der Verstärkerstufe 27 anliegende Geschwindigkeits-Istwert wird in einer Subtrahierstufe 28 vom vorgegebenen Differenzdruck-Sollwert SW1 abgezogen. Dieser Differenzdruck-Sollwert SW1 wird ebenfalls in einer Verstärkerstufe 29 verstärkt und/oder aufbereitet. Der durch den Geschwindigkeits-Istwert modifizierte Differenzdruck-Sollwert SW2 wird in einer weiteren Subtrahierstufe 30 mit dem Differenzdruck-Istwert ÄP verglichen, und eine sich daraus ergebende Regelabweichung wird dem Druckregler 17 zugeführt. Wird nun ein Differenzdruck-Sollwert SW1 vorgegeben, so wird zunächst ein entsprechender Differenzdruck in den Zylinderkammern 13, 14 aufgebaut. Hierdurch bewegt sich der Kolben 11 in der gewünschten Richtung zu derjenigen Stelle hin, an der eine dem Differenzdruck entsprechende Kraft ausgeübt werden soll. Infolge der Bewegung des Kolbens 11 wird ein Geschwindigkeits-Istwert v gebildet, durch den ein um einen geschwindigkeitsabhängigen Teil reduzierter Differenzdruck-Sollwert SW2 gebildet wird. Dieser bewirkt, dass der Kolben 11 langsamer mit konstanter Geschwindigkeit ausfährt und so einen zu heftigen Aufprall in der Arbeitsposition vermeidet. Erreicht der Antrieb seine Endlage bzw. erreicht die Kolbenstange 12 die jenige Arbeitsposition, in der die gewünschte Kraft ausgeübt werden soll, so wird die Geschwindigkeit zu Null, und die Sollwerte SW1 und SW2 sind identisch. Es wird somit von der Kolbenstange eine Kraft ausgeübt, die dem ursprünglich angelegten Differenzdruck-Sollwert SW1 entspricht.

Durch die Verstärkerstufen 25 und/oder 27 lässt sich der Einfluss der Geschwindigkeit auf die Bewegung einstellen, das heißt, die Geschwindigkeit kann im wesentlichen unabhängig vom Differenzdruck-Sollwert SW1 in beliebiger Weise vorgegeben werden, wobei auch nicht-lineare Funktionen vom Weg möglich sind.

Anstelle der beiden Subtrahierstufen 28, 30 kann selbstverständlich auch eine einzige Subtrahierstufe treten, in der die entsprechenden Subtrahiervorgänge bzw. Vergleichsvorgänge ausgeführt werden. Weiterhin kann alternativ auch zunächst die Differenz zwischen dem Differenzdruck-Sollwert SW1 und dem Differenzdruck-Istwert ÄP gebildet werden, wobei dann anschließend ein vom Geschwindigkeits-Istwert abhängiger Wert abgezogen wird.

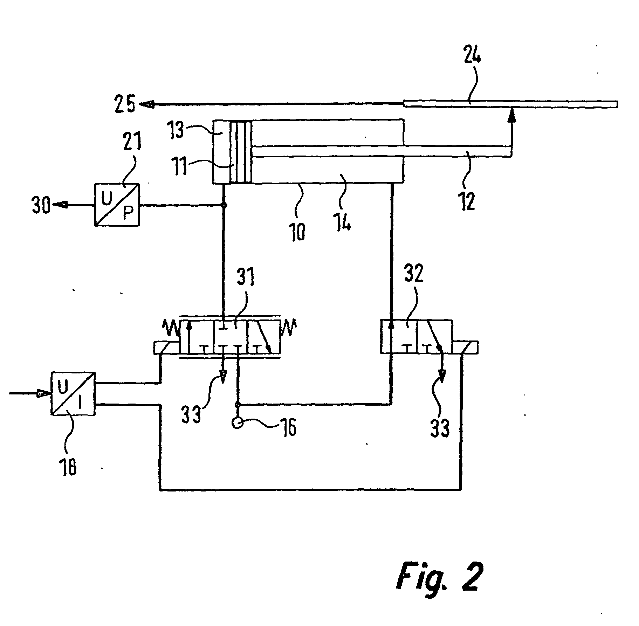

Bei dem in Fig. 2 dargestellten zweiten Ausführungsbeispiel sind gleiche oder gleichwirkende Bauteile und Baugruppen mit denselben Bezugszeichen versehen und nicht nochmals beschrieben. Anstelle des als Proportionalventil ausgebildeten 5/3-Wegeventils 15 treten hier ein als Proportionalventil ausgebildetes 3/3-Wegeventil 31 sowie ein 3/2-Schaltventil 32. Das 3/3-Wegeventil 31 ist zwischen der ersten Zylinderkammer 13 und der Druckquelle 16 sowie einem Auslaß 33 geschaltet, während das 3/2-Schaltventil 32 entsprechend an die zweite Zylinderkammer 14 angeschlossen ist. Da das 3/2-Schaltventil 32 die zweite Zylinderkammer 14 immer entweder mit dem Auslaß 33, also dem Umgebungsdruck, oder mit der Druckquelle 16 verbindet, herrschen in dieser zweiten Zylinderkammer 14 immer definierte Druckverhältnisse. Zur Erfassung des Differenzdrucks genügt daher ein einziger Druck-Spannungs-Wandler 21, der an der Verbindungsleitung zwischen der ersten Zylinderkammer 13 und dem 3/3-Wegeventil 31 oder direkt an der Zylinderkammer 13 angeschlossen ist. Auch ein entsprechender Drucksensor kann selbstverständlich vorgesehen sein.

Durch Ausgänge des Spannungs-Strom-Wandlers 18 werden die beiden Ventile 31, 32 gegensinnig gesteuert, das heißt, wenn durch das 3/3-Wegeventil 31 eine Druckbeaufschlagung der Zylinderkammer 13 erfolgt, so ist das 3/2-Schaltventil mit dem Auslaß 33 verbunden, und wenn das 3/2-Schaltventil 32 mit der Druckquelle 16 verbunden wird, so ist das 3/3-Wegeventil 31 mit dem Auslaß 33 verbunden. Die Bestimmung des Differenzdrucks kann in einer gesonderten Funktionsstufe oder in einer vorhandenen Stufe erfolgen, beispielsweise im Druck-Spannungs-Wandler 21.

## Patentansprüche

1. Vorrichtung zur Einstellung des Differenzdrucks in den Kammern (13, 14) eines Fluidzylinders (10) mittels einer Proportionalventilanordnung (15; 31, 32), mit einem durch einen Differenzdruck-Sollwert (SW1) und einem Differenzdruck-Istwert (ΔP) beaufschlagbaren Druckregler (17) zur Regelung der Proportionalventilanordnung (15; 31, 32), und mit Mitteln zur Erfassung der Geschwindigkeit des Kolbens (11) im Fluidzylinder (10), wobei der Geschwindigkeits-Istwert (v) als Einflussgröße dem Regelkreis zuführbar ist, **dadurch gekennzeichnet, dass** eine den Differenzdruck-Sollwert (SW1) oder die Regelabweichung um den Geschwindigkeits-Istwert (v) oder einen von diesem abhängigen Wert verringernde Subtrahieranordnung (28) vorgesehen ist.

2. Vorrichtung nach Anspruch 1, **dadurch gekennzeichnet, dass** eine Positionsmessvorrichtung (24) für den Kolben (11) und eine den Positions-Istwert (x) in einen Geschwindigkeits-Istwert (v) umsetzende Differenzierstufe (26) vorgesehen ist.

3. Vorrichtung nach Anspruch 1 oder 2, **dadurch gekennzeichnet, dass** eine Subtrahieranordnung (23) zur Bildung des Differenzdruck-Istwerts (ΔP) aus den Messgrößen zweier Drucksensoren oder Druck-Spannungs-Wandler (21, 22) zur Erfassung des Drucks in den Kammern (13, 14) des Fluidzylinders (10) vorgesehen ist.

4. Vorrichtung nach einem der vorhergehenden Ansprüche, **dadurch gekennzeichnet, dass** dem Druckregler (17) ein Spannung-Strom-Wandler (18) nachgeschaltet ist.

5. Vorrichtung nach einem der vorhergehenden Ansprüche, **dadurch gekennzeichnet, dass** die Proportionalventilanordnung (15) als mit den beiden Zylinderkammern (13, 14) verbundenes 5/3-Proportional-Wegeventil ausgebildet ist.

6. Vorrichtung nach einem der Ansprüche 1 bis 4, **dadurch gekennzeichnet, dass** als Proportionalventilanordnung ein mit der einen Zylinderkammer (13) verbundenes 3/3-Proportional-Wegeventil (31) und ein mit der anderen Zylinderkammer (14) verbundenes 3/2-Schaltventil (32) vorgesehen sind.

7. Vorrichtung nach Anspruch 6, **dadurch gekennzeichnet, dass** nur ein Drucksensor oder Druck-Spannungs-Wandler (21) zur Erfassung des Drucks in der mit dem 3/3-Proportional-Wegeventil (31) verbundenen Zylinderkammer (14) vorgesehen ist.

8. Vorrichtung nach Anspruch 6, **dadurch gekennzeichnet, dass** Verstärker- und/oder Funktionsstufen zur funktionalen Beeinflussung des Geschwindigkeits-Istwerts und/oder des Differenzdruck-Sollwerts (SW1) vorgesehen ist.

9. Vorrichtung nach einem der vorhergehenden Ansprüche, **dadurch gekennzeichnet, dass** der Fluidzylinder (10) als eine vorgebbare Kraft ausübbares Stellglied ausgebildet ist, insbesondere für die Fügetechnik.

## Claims

1. Device for regulating the pressure difference in the chambers (13, 14) of a fluid cylinder (10) by means of a proportional valve assembly (15; 31, 32), with a pressure regulator (17) which may be supplied with a pressure difference required value (SW1) and a pressure difference actual value (ΔP) for regulation of the proportional valve assembly (15; 31, 32), and with means of detecting the velocity of the piston (11) in the fluid cylinder (10), wherein the velocity actual value (v) may be supplied to the control circuit as influencing variable, **characterised in that** there is provided a subtracter assembly (28) reducing the pressure difference required value (SW1) or the control deviation by the velocity actual value (v) or a value dependent on the latter.

2. Device according to claim 1, **characterised in that** a position measuring device (24) for the piston (11) and a difference stage (26) converting the position actual value (x) into a velocity actual value (v) are provided.

3. Device according to claim 1 or 2, **characterised in that** there is provided a subtracter assembly (23) for forming the pressure difference actual value (ΔP) from the measured values of two pressure sensors or pressure-voltage transformers (21, 22), to determine the pressure in the chambers (13, 14) of the fluid cylinder (10).

4. Device according to any of the preceding claims, **characterised in that** there is a voltage-current transformer (18) downstream of the pressure regulator (17).

5. Device according to any of the preceding claims, **characterised in that** the proportional valve assembly (15) is in the form of a 5/3 proportional directional control valve connected to the two cylinder chambers (13, 14).

6. Device according to any of claims 1 to 4, **characterised in that** the proportional valve assembly comprises a 3/3 proportional directional control valve (31) connected to the one cylinder chamber (13) and a 3/2-way switching valve (32) connected to the other cylinder chamber (14).

7. Device according to claim 6, **characterised in that** only one pressure sensor or pressure-voltage transformer (21) is provided to determine the pressure in the cylinder chamber (14) connected to the 3/3 proportional directional control valve (31).

8. Device according to claim 6, **characterised in that** amplifier and/or function stages are provided for functional influencing of the velocity actual value and/or the pressure difference required value (SW1).

9. Device according to any of the preceding claims, **characterised in that** the fluid cylinder (10) is in the form of a control element capable of exerting presettable force, in particular for jointing processes.

## Revendications

1. Dispositif de réglage de la pression différentielle dans les chambres (13, 14) d'un vérin (10), au moyen d'un agencement de soupape proportionnelle (15; 31, 32), comportant un régulateur de pression (17) sur lequel peut agir une valeur de consigne de la pression différentielle (SW1) et une valeur réelle de la pression différentielle (ΔP) pour la régulation de l'agencement de soupape proportionnelle (15 ; 31, 32), et comportant des moyens pour détecter la vitesse du piston (11) dans le vérin (10), la valeur réelle de la vitesse (v) pouvant être amenée au circuit de régulation en tant que grandeur d'influence, **caractérisé en ce qu'**il est prévu un dispositif de soustraction (28) réduisant la valeur de consigne de la pression différentielle (SW1) ou l'écart de régulation autour de la valeur réelle de la vitesse (v) ou une valeur dépendant de celle-ci.

2. Dispositif selon la revendication 1, **caractérisé en ce qu'**il est prévu un dispositif de mesure de position (24) pour le piston (11) et un étage de différenciation (26) convertissant la valeur réelle de position (x) en une valeur réelle de vitesse (v).

3. Dispositif selon la revendication 1 ou 2, **caractérisé en ce qu'**il est prévu un dispositif de soustraction (23) pour former la valeur réelle de la pression différentielle (ΔP) à partir des grandeurs mesurées de deux capteurs de pression ou convertisseurs pression-tension (21, 22), pour détecter la pression dans les chambres (13, 14) du vérin (10).

4. Dispositif selon l'une des revendications précédentes, **caractérisé en ce qu'**un convertisseur tension-courant (18) est couplé en aval du régulateur de pression (17).

5. Dispositif selon l'une des revendications précédentes, **caractérisé en ce que** l'agencement de soupape proportionnelle (15) est réalisé comme soupape proportionnelle à 5/3 voies reliée aux deux chambres de vérin (13, 14).

6. Dispositif selon l'une des revendications 1 à 4, **caractérisé en ce que** sont prévues comme agencement de soupape proportionnelle une soupape proportionnelle à 3/3 voies (31) reliée à une chambre de vérin (13) et une soupape de commutation à 3/2 voies (32) reliée à l'autre chambre de vérin (14).

7. Dispositif selon la revendication 6, **caractérisé en ce qu'**il n'est prévu qu'un capteur de pression ou convertisseur pression-tension (21) pour détecter la pression dans la chambre de vérin (14) reliée à la soupape proportionnelle à 3/3 voies (31 ).

8. Dispositif selon la revendication 6, **caractérisé en ce que** sont prévus des étages d'amplification et/ou fonctionnels pour l'action fonctionnelle sur la valeur réelle de la vitesse et/ou la valeur de consigne de la pression différentielle (SW1).

9. Dispositif sleon l'une des revendications précédentes, **caractérisé en ce que** le vérin (10) est réalisé comme organe de réglage pouvant exercer une force prédéfinie, en particulier pour la technique d'assemblage.
